Europäisches Patentamt

European Patent Office

Office européen des brevets

(11) Veröffentlichungsnummer: **0 289 834 B1**

(12) # EUROPÄISCHE PATENTSCHRIFT

(45) Veröffentlichungstag der Patentschrift: **30.12.92**

(51) Int. Cl.⁵: **B23Q 3/155**

(21) Anmeldenummer: **88106042.0**

(22) Anmeldetag: **15.04.88**

(54) **Flexible Fertigungseinrichtung mit mehreren parallel im Abstand nebeneinander angeordneten Bearbeitungsmaschinen.**

(30) Priorität: **06.05.87 DE 3715032**
**26.05.87 DE 3717683**

(43) Veröffentlichungstag der Anmeldung:
**09.11.88 Patentblatt 88/45**

(45) Bekanntmachung des Hinweises auf die
Patenterteilung:
**30.12.92 Patentblatt 92/53**

(84) Benannte Vertragsstaaten:
**BE CH DE GB LI NL SE**

(56) Entgegenhaltungen:

**PATENT ABSTRACTS OF JAPAN, Band 9, Nr. 18 (M-353)[1741], Januar 1985; & JP-A-59 166 437 (TOYODA) 19-09-1984**

**PATENT ABSTRACTS OF JAPAN, Band 9, Nr. 135 (M-386)[1858], 11 Juni 1985; & JP-A-60 016 330 (HITACHI) 28-01-1985**

**MACHINERY, Band 133, Nr. 3437, November 1978, Seiten 27-32: "High stakes in the batch production race"**

(73) Patentinhaber: **DÖRRIES SCHARMANN GmbH**
**Hugo-Junkers-Strasse 12/32**
**W-4050 Mönchengladbach 2(DE)**

(72) Erfinder: **Esser, Karl-Josef, Dipl.-Ing.**
**Pauenstrasse 89**
**W-4050 Mönchengladbach 5(DE)**

(74) Vertreter: **Rehders, Jochen, Dipl.-Ing.**
**Stresemannstrasse 28**
**W-4000 Düsseldorf 1(DE)**

Rank Xerox (UK) Business Services

## Beschreibung

Die Erfindung betrifft eine flexible Fertigungseinrichtung mit mehreren parallel im Abstand nebeneinander angeordneten Bearbeitungsmaschinen wie z. B. Bohr- und Fräsmaschinen nach dem Oberbegriff des Anspruchs 1.

Eine derartige flexible Fertigungseinrichtung ist in "Patent Abstracts of Japan", Band 9, Nr. 135 JP-A-60 016 330, beschrieben. Bei dieser bekannten Einrichtung sind in der Nähe von mehreren Werkzeugmaschinen Werkzeugspeicher angeordnet. Die Werkzeugmaschinen bearbeiten auf Paletten mittels Transportvorrichtungen herangebrachte Werkstücke unter Benutzung von Universal- und Spezialwerkzeugen. Nach der Bearbeitung werden die eine Aufarbeitung erfordernden Universalwerkzeuge in die zentralen Werkzeugspeicher tranportiert, während aufgearbeitete Universalwerkzeuge aus den zentralen Werkzeugspeichern entnommen und zu den Werkzeugspeichern an den Werkzeugmaschinen transportiert werden. - Diesem Stand der Technik gegenüber besteht die Aufgabe der Erfindung darin, eine Fertingungseinrichtung zu schaffen, bei der die Werkzeuge in raumsparenden Magazinen untergebracht sind und ferner in zeitsparender Weise zu den Bearbeitungsmaschinen und umgekehrt gebracht werden können, was mit konstruktiv einfachen, schnell beweglichen und problemlos zu handhabenden Mitteln erfolgen soll. Hierdurch soll die Effektivität eines auf kleiner Bodenfläche installierten Fertigunssystems gegenüber bekannten Systemen gesteigert werden, wobei sowohl die Bearbeitungsmaschinen wie auch die Transporteinrichtung der Werkzeuge zugänglich sein sollen.

Zur Lösung dieser Aufgabe sieht die Erfindung die Merkmale des Anspruches 1 vor. - Die Merkmale der abhängigen Ansprüche dienen der Verbesserung und Weiterentwicklung der Merkmale des Anspruches 1.

Durch die Anordnung der regalartigen Magazine in zwei Etagen übereinander wird bereits eine raumsparende Speicherung von Werkzeugen gewährleistet. Hierbei jedoch bleibt die Zugänglichkeit zu den Bearbeitungsmaschinen von deren Rückseite her voll gewahrt. Die Transportvorrichtungen sorgen für ein schnelles und vor allem genaues Erfassen und Transportieren der Werkzeuge zu und von den Bearbeitungsmaschinen bzw. den Regalen.

Auf der Zeichnung ist ein Ausführungsbeispiel der flexiblen Fertigungseinrichtung nach der Erfindung und deren Teile dargestellt und zwar zeigt

Fig. 1        eine Draufsicht auf die Fertigungseinrichtung mit zwei Bearbeitungsmaschinen,

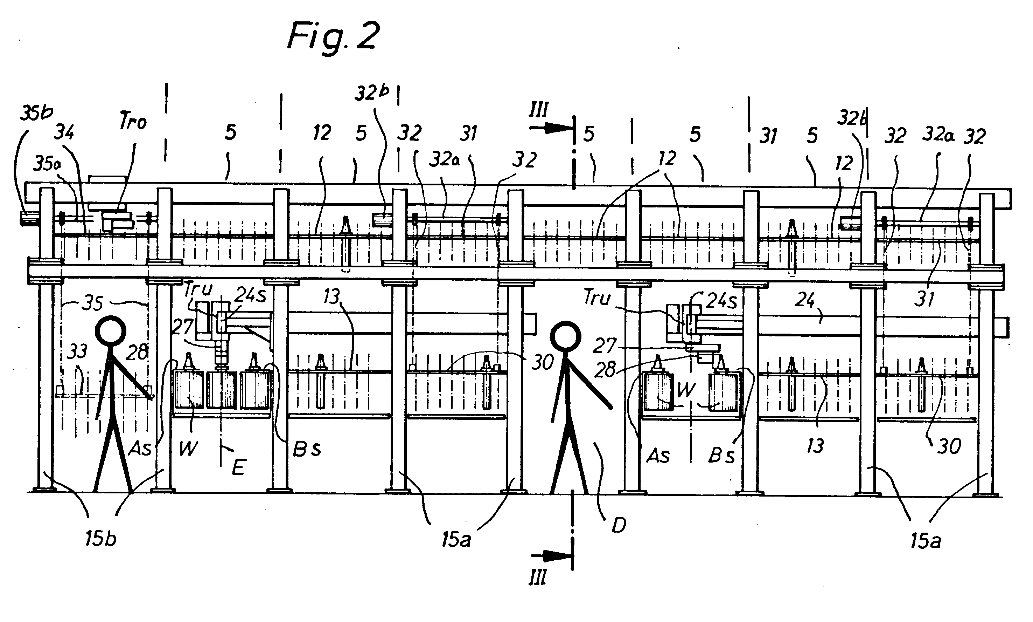

Fig. 2        einen Schnitt nach der Linie II - II der Fig. 1,

Fig. 3        einen Schnitt nach der Linie III - III der Fig. 2,

Fig. 4        die Vorrichtung zum Erfassen und Transportieren der Werkzeuge im Vertikalschnitt,

Fig. 5 und 6        ein Werkzeug und die an ihm angreifenden Teile der Transportvorrichtung in vergrößertem Maßstab gegenüber Fig. 2 und 3, wobei das Werkzeug in seiner Ausgangsstellung und in seiner mit der Transportvorrichtung verbundenen Stellung dargestellt ist,

Fig. 7 und 8        einen Schnitt nach den Linien VII - VII und VIII - VIII der Fig. 4.

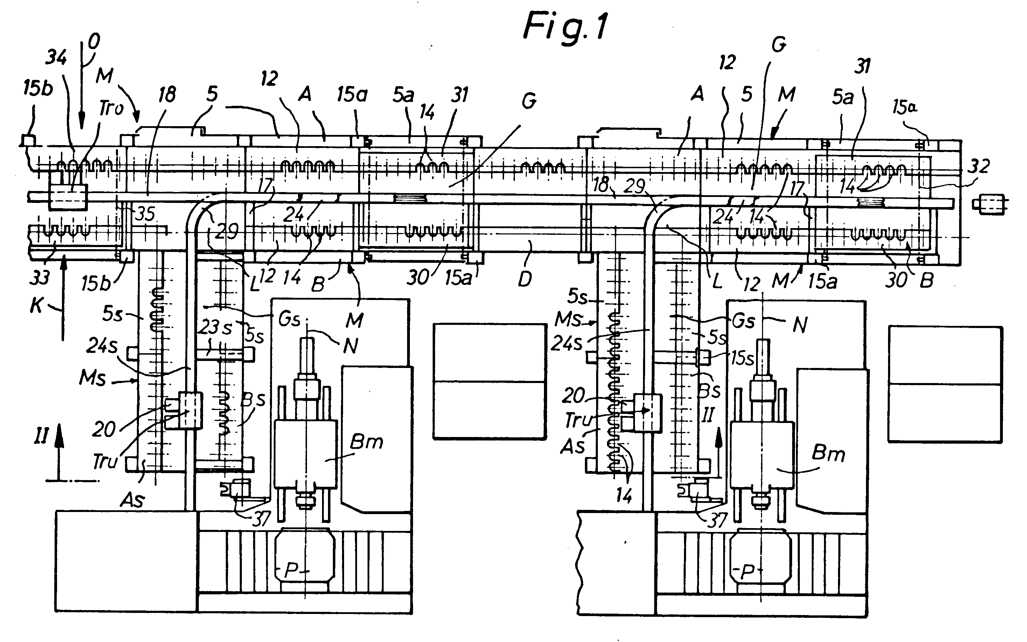

In Fig. 1 sind die beiden Bearbeitungsmaschinen Bm in Draufsicht zu erkennen. Vor ihnen ruhen die zu bearbeitenden Werkstücke auf Paletten P, die in Querrichtung vor den Bearbeitungsmaschinen Bm verfahrbar sind. Diesen Bearbeitungsmaschinen sind Magazine M zugeordnet, die parallel zur Verfahrrichtung der Paletten P der Werkstücke hinter den Bearbeitungsmaschinen Bm angeordnet sind. Parallel zur Längsmittelachse N der Bearbeitungsmaschinen erstrecken sich weitere Magazine Ms, die im Prinzip den gleichen Aufbau haben wie die an der Rückseite der Bearbeitungsmaschinen Bm angeordneten Magazine M. Die Magazine M und Ms sind hierbei in zwei zueinander und parallel zur Verfahrrichtung der Paletten P bzw. senkrecht hierzu gelegene Magazinreihen A und B bzw. As und Bs angeordnet, zwischen denen eine Gasse G bzw. Gs gebildet ist.

Jede der beiden parallelen Magazinreihen A, B hinter den Maschinen Bm weist in Längsrichtung aufeinanderfolgende vertikale Magazinabschnitte 5 auf, die ihrerseits einen oberen Regalboden 12 und einen unteren Regalboden 13 haben. Die oberen und unteren Regalböden 12, 13 beider paralleler Reihen A und B liegen paarweise in gleichen Ebenen und weisen Ausnehmungen 14 auf, deren Öffnung bei den sich gegenüberliegenden Regalböden gegeneinander gerichtet sind, wie dies Fig. 1 erkennen läßt.

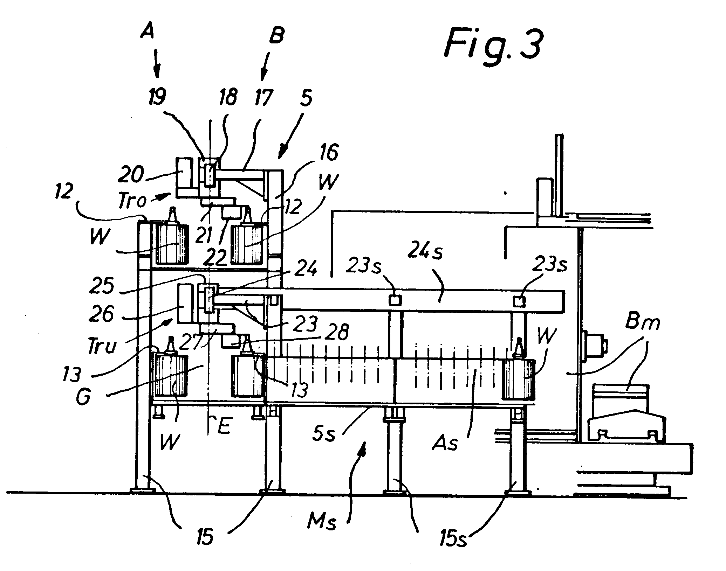

Die Regalböden 12, 13 der Magazinreihen A, B werden von Tragsäulen 15 gehalten, die sich paarweise gegenüberliegen, wobei jeweils eine dieser beiden Tragsäulen eine Verlängerung 16 trägt, die über die beiden oberen Regalböden 12 hinausragt. An dieser Verlängerung ist ein galgenförmiger Arm 17 angeordnet, der eine obere Tragschiene 18 an seinem Ende trägt. An dieser Tragschiene ist eine obere Transportvorrichtung Tro mit einem Führungsteil 19 geführt, der ein Antriebsaggregat 20 besitzt. An der Unterseite des Führungsteils 19 ist in der Mittelebene E der Gasse G zwischen den beiden Magazinreihen A und B ein Arm 21 schwenkbar, an dessen Ende ein zweiter Schwenkarm 22 angeordnet ist, dessen Ende die Werkzeuge W ergreift und trägt. Dieser Doppelarm 21, 22 vermag Werkzeuge aus dem linken oberen Regalboden 12 in Fig. 3 in eine Mittelstellung in der vertikalen Ebene E ebenso zu bringen wie in den rechten oberen Regalboden 12 in der genannten Figur und umgekehrt. Damit kann der Doppelarm die in den gegenüberliegenden Ausnehmungen 14 der oberen Regalböden 12 befindlichen Werkzeuge W aus diesen entnehmen und sie in die Mittelebene E der Gasse G bringen, um sie an geeigneter Stelle wieder in einem der Regalböden abzulegen oder an eine andere Übergabestelle zu transportieren.

Die Tragsäule 15 der Reihen A, B, die die Verlängerung 16 mit dem galgenförmigen Arm 17 trägt, besitzt etwa in der Mitte der Säulenhöhe einen weiteren Arm 23 gleicher Art wie der Arm 17, d. h. dieser trägt an seinem freien Ende eine untere Tragschiene 24, an der eine oder mehrere untere Transporteinrichtungen Tru mit einem Führungsteil 25 mit Antriebsaggregaten 26 längsgeführt wird bzw. werden. Auch trägt das untere Führungsteil 25 schwenkbare Arme 27, 28, die in der Lage sind, die Werkzeuge der unteren Regalböden 13 zu erfassen und zu transportieren. Die Werkzeuge werden auch hier in der Mittelebene E der Gasse zwischen den Regalböden 13 transportiert.

Die parallel zur Längsmittelachse N der Maschinen Bm gelegenen Reihen As und Bs der Magazine Ms weisen Abschnitte 5s auf, die Tragsäulen 15s haben, die keine Verlängerung wie die Verlängerung 16 der Säulen 15 zu haben brauchen, wie dies die Fig. 3 erkennen läßt. Auf Höhe der Teile 23, 24 der Säulen 15 weisen die Säulen 15s entsprechende Arme 23s und eine Schiene 24s auf, an der die unteren Transportvorrichtungen Tru verfahrbar sind. Hierzu erstrecken sich die unteren Regalböden 13 der Magazinreihe B nur über einen Teil der Gesamtlänge der Magazine M, wobei eine oder mehrere Lücken L (je nach Anzahl der Maschinen Bm und der Anzahl der Magazine Ms) vorgesehen sind. An den Lücken L sind Schienenkrümmungen 29 vorgesehen, durch die die Schienen 24 mit den Schienen 24s horizontal verbunden sind, so daß eine untere Transportvorrichtung Werkzeuge aus den Magazinen M in die Magazine Ms und umgekehrt bringen kann. - Die Lücke L hat die Länge eines Regalbodens 13. - Neben einer der Lücken L (in Fig. 1 neben der rechten Lücke L) der unteren Regalböden 13 der Regalreihe B ist auf gleicher Höhe eine weitere Lücke D in der Reihe B belassen, die ebenfalls die Länge eines Regalbodens hat. Auf Höhe der Lücke D entfällt auch der untere Regalboden 13 der Reihe

he A, so daß ein freier Durchgang in Mannshöhe unterhalb der oberen Regalböden 12 der Reihen A und B entsteht, über den die Werkzeuge W, an den Armen 21, 22 hängend, transportiert werden.

Die Regalabschnitte 5a an einem (in Fig. 1 rechten) Ende und, wie dargestellt, in der Mitte der Reihen A, B haben eine besondere Gestalt. Hier finden an den Tragsäulen 15a höhenverschiebliche Regalböden 30, 31 Anwendung, wobei dem Abschnitt 5a jeder Reihe A, B nur ein Regalboden 30 bzw. 31 zugeordnet ist, die durch über Umlenkrollen einer Antriebswelle 32a geführte Ketten 32 miteinander verbunden sind, wobei die Kettenlänge derart abgestimmt ist, daß z. B. der Regalboden 30 seine unterste Stellung auf Höhe der unteren Regalböden 13 der Reihe A aufweist, während der Regalboden 31 seine oberste Stellung auf Höhe der oberen Regalböden 12 der Reihe B einnimmt. Die beiden Regalböden 30, 31 sind somit nach Art eines Gegengewichtszuges miteinander verbunden und bewegen sich in dieser Art, wenn die Antriebswelle 32 durch einen Motor 32b betätigt wird.

Eine gleiche Ausbildung besitzen die Regalabschnitte 5b am anderen (in Fig. 1 linken) Ende der beiden Magazinreihen A, B. Auch dort sind die beiden Regalböden 33, 34 an Säulen 15b höhenverstellbar, durch Ketten 35 einer Antriebswelle 35a mittels eines Motors 35b wie die Böden 30, 31 miteinander verbunden und bewegbar. Einer der beiden Regalböden 33, 34 kann entfallen, und die Ketten 35 können auf eine Rolle auf der Welle 35a aufgewickelt werden. Auch kann hier statt des einen Regalbodens ein Kontergewicht gewählt werden. Der Regalabschnitt 5b der Reihe B ist auf Höhe der unteren Regalböden 13 in Richtung der Pfeile K und O zugänglich, so daß hier ein mechanisches oder manuelles Bestücken der Regalböden 33, 34 erfolgen kann. Hierbei ist die Länge der Ketten 35 so gewählt, daß einer der Regalböden 33, 34 jeweils in seiner untersten Stellung in günstiger Höhenstellung für die Bedienungsperson sich befindet, um das Be- und Entladen des Regalbodens leichter und bequemer zu gestalten, während der jeweils andere bewegliche Regalboden auf Höhe der Regalböden 12 der Reihen A, B sich befindet.

Statt eines an den Ketten 35 hängenden Regalbodens 33 oder 34 kann eine diesen Regalböden entsprechende Kassette Anwendung finden, die abseits der Einrichtung be- und entladen wird und die z. B. mittels eines Gabelstaplers oder einer vergleichbaren Vorrichtung in die Stellung des Regalbodens 33 oder 34 gebracht und dort mit den Ketten 35 verbunden wird.

Am Ende der Magazinreihen Bs ist je ein Wechselarm 37 vorgesehen, durch den die in den Regalböden der Magazinreihen A, B bzw. As, Bs hängenden und in vertikaler Stellung mit Hilfe der Transporteinrichtungen Tru transportierten Werkzeuge W aus ihrer senkrechten Lage in eine horizontale Stellung gebracht werden, wodurch sie in das nicht dargestellte Werkzeugmagazin an den Bearbeitungsmaschinen Bm oder in die Bohrspindel einsetzbar sind.

Die Transporteinrichtung an der oberen Tragschiene 18 kann Werkzeuge aus den oberen Regalböden beliebiger Art und Reihenfolge bis zu den Abschnitten 5a an den Enden der Reihen A, B befördern. In diesen Abschnitten kann ein Wechsel der Werkzeuge aus den oberen Regalböden 12 in die unteren Regalböden 13 und umgekehrt erfolgen oder aber die Werkzeuge aus den beweglichen Regalböden 30, 31 der Abschnitte 5a können unmittelbar von den Transporteinrichtungen Tru der unteren Tragschienen 24, 24s zu den Magazinreihen A und B oder unmittelbar zu den Wechselarmen 37 befördert werden.

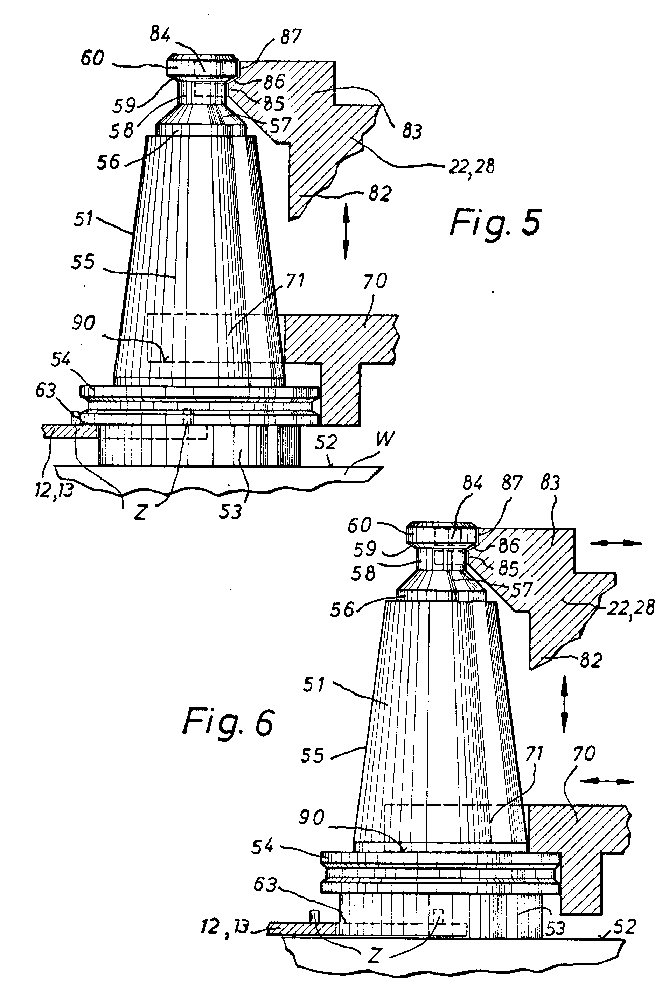

Für den vorbeschriebenen Vorgang des Transportierens müssen die hängenden Werkzeuge W schnell und genau erfaßt und aus den Ausnehmungen 14 der Regalböden 12, 13 der Abschnitte 5 und 5s herausgehoben bzw. in diese hineingebracht werden und ferner die Werkzeuge aus und in die Wechselvorrichtung 37 herausgenommen bzw. hineingegeben werden. Hierzu weisen die Werkzeuge W den Werkzeugschaft 51 auf, der angrenzend an die Oberseite 52 des werkzeuges einen zylindrischen Abschnitt 53 hat, an den sich nach oben ein ringartiger Wulst 54 anschließt, dessen Außendurchmesser nennenswert größer ist als der des zylindrischen Abschnittes 53. Über diesem ringartigen Wulst setzt der Konus 55 des Schaftes an, an den zunächst ein zylindrischer Teil 56 sowie ein sich nach oben verjüngender konischer Abschnitt 57 angrenzt. Über diesem ist wiederum ein zylindrischer Teil 58 und daran eine nach außen gerichtete konische Anlagefläche 59 mit einem zylindrischen Abschnitt 60 erkennbar (Fig. 4).

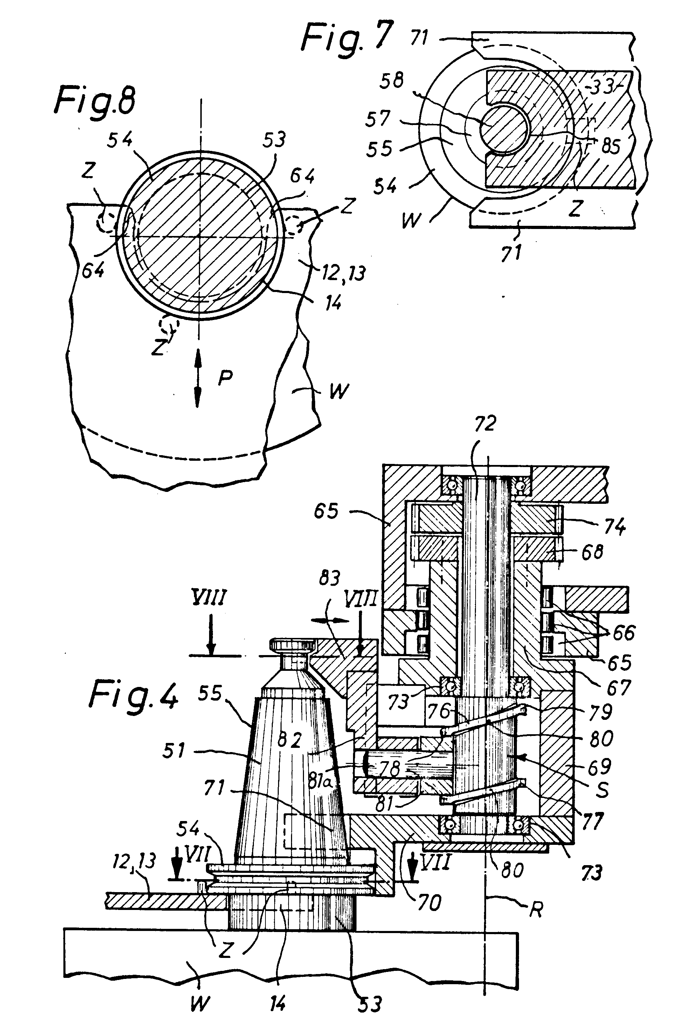

Das Werkzeug W befindet sich in seiner Ruhestellung in einer Ausnehmung 14 des Regalbodens 12, 13. Das Werkzeug hängt hierbei mit seinem ringförmigen Wulst 54 auf dem Rand 63 der Ausnehmung 14, die einen Öffnungswinkel von etwa 180° besitzt, wobei die Endabschnitte der Ausnehmung 14 des Regalbodens 12, 13 in auswärts gerichtete Krümmungen oder Abschrägungen 64 übergehen, so daß der zylindrische Abschnitt 53 des Werkzeuges W problemlos in Richtung des Doppelpfeiles P in die Ausnehmung 14 eingehängt und aus der Ausnehmung herausgenommen werden kann. Der Abschnitt 53 hängt in der Ruhestellung des Werkzeuges in der Ausnehmung 14 in genau positionierter Stellung (Fig. 7).

In einem Gehäuse 65 der äußeren Arme 22, 28 der Transporteinrichtungen Tru und Tro ist mit Hilfe der Lager 66 der Abschnitt 67 einer Schwenkvorrichtung S drehbar gelagert. Dieser ist mit einem Stirnrad 68 verbunden, durch das die Schwenkvorrichtung in Drehung versetzt werden kann. Der Abschnitt 67 besitzt eine seitliche, nach unten gerichtete Verlängerung 69, an welcher ein horizontaler Arm 70 angeordnet ist, dessen vorderer Bereich 71, wie untenstehend noch erläutert wird, gabelartig nach außen offen ausgebildet ist (Fig. 8). In dem Abschnitt 67 ist bis in den Arm 70 reichend eine vertikale Welle 72 gelagert, die mit Hilfe der beiden Lager 73 um die Mittelachse R drehbar ist. Der Antrieb erfolgt hierbei über ein Stirnrad 74, dessen Durchmesser und Zähenzahl dem Durchmesser und der Zähenzahl des Stirnrades 68 entspricht, so daß bei Drehung des Armabschnittes 67 mit Hilfe des Zahnrades 68 keine Relativdrehung der Achse 72 gegenüber dem Abschnitt 67 erfolgt.

Der untere Abschnitt der Welle 72 zwischen den beiden Lagern 73 weist zwei parallele, geschlossene Gewindegänge 76, 77 auf. Diese besitzen je einen unteren horizontalen Bereich 78 und einen oberen ebenfalls horizontalen Bereich 79, zwischen denen geneigte Gewindegangabschnitte 80 vorhanden sind. Zwischen die beiden Gewindegänge 76, 77 greift eine durch die Gewindegänge bei Drehung der Welle 72 höhenverstellbare Kurvenrolle 81 ein, deren Achse 81a in einem winkelförmigen Teil 82 gelagert ist, der in nicht dargestellter Weise an dem Gehäuse 65 höhenverstellbar geführt ist. Der Kopf 83 des Teils 82 ist wiederum gabelartig ausgebildet, wobei die Öffnung entgegengesetzt zu der Öffnung der Ausnehmung 14 des Regalbodens 12, 13 gerichtet ist. Der Innenrand der so gebildeten Ausnehmung 84 des Kopfes 83, die wie die Ausnehmung 14 einen Umfang von 180° und den Abschrägungen oder Krümmungen der Ausnehmung 14 entsprechende Abschnitte aufweist, zeigt einen zylindrischen Abschnitt 85 (Fig. 5 und 6) und einen sich daran nach oben anschließenden konischen Abschnitt 86, an den ein weiterer Abschnitt 87 angrenzen kann. Die Ausbildung und Anordnung der vorstehend genannten Abschnitte des Kopfes 83 entspricht der Ausbildung der Abschnitte 58, 59 und 60 des Werkzeugschaftes 51. An den Abschnitten 58 bis 60 liegen die Abschnitte 85 bzw. 86 des Kopfes 83 bündig an, gleichgültig, ob, wie unten erläutert wird, der konische Abschnitt 85 des Kopfes 83 an dem konischen Abschnitt 59 des Schaftes 51 anliegt, d. h. das Werkzeug durch den Kopf 83 gehoben wird oder der Kopf 83 in seiner tiefsten Stellung sich befindet. Hierdurch ist außer der exakten Positionierung des Werkzeuges W in dem Regalboden 12, 13 auch eine genaue Positionierung des Werkzeuges gegenüber dem Armabschnitt 67 und seinen Teilen gegeben.

Das Werkzeug W mit seinen Teilen weist zunächst die in Fig. 5 dargestellte Lage auf, bei der, wie ausgeführt, der ringartige Wulst 54 auf dem Rand 63 der Ausnehmung 14 aufliegt. Erhält die Welle 72 mit Hilfe ihres Stirnrades 74 eine Drehung, so wird die Kurvenrolle 81 mit Hilfe der geschlossenen Gewindegänge 76, 77 in die Stellung nach Fig. 6 angehoben, wobei der Kopfabschnitt 86 an dem konischen Abschnitt 59 anliegt. Hierdurch kommt der ringartige Wulst 54 gegen die Unterkanten 90 des ebenfalls gabelartigen Bereichs 71 des Armes 70 zur Anlage, wodurch das Werkzeug W mit dem Arm verspannt wird, so daß das Werkzeug mit diesem gedreht und transportiert werden kann. Bei dieser Drehung behält das Werkzeug aufgrund der Gleichartigkeit der Antriebsräder 68 und 74 seine Koordinatenlage bei und kann geradlinig bewegt werden, obwohl der Abschnitt 67 eine Drehung durchführt.

Soll das Werkzeug in eine Ausnehmung 14 eines Regalbodens 12, 13 eingesetzt werden, so bewegt der Armabschnitt 67 das Werkzeug in die Ausnehmung 14, wobei das Werkzeug in der Ausnehmung wieder positioniert wird. Wird jetzt der Kopf 83 mit Hilfe der Gewindegänge 76, 77 und der Kurvenrolle 81 abgesenkt, legt sich der Wulst 54 wieder auf den Rand 63 der Ausnehmung 14 und der Kopf 83 kann von den Abschnitten 58, 59, 60 des Schaftes 51 fortbewegt werden.

Ist der obere Werkzeugschaftabschnitt z. B. statt der konischen Anlagefläche 59 mit einem zylindrischen Wulst versehen, so ist der Abschnitt 86 als horizontaler Vorsprung ausgebildet.

Es ist erkennbar, daß das Abheben des Wulstes 54 des Werkzeuges von dem Regalboden 12, 13 gleichzeitig zum Festspannen mit der Transporteinrichtung, hier mit dem Arm 22, 28 erfolgt.

Weicht die Form des Schaftkopfes des Werkzeugs von der dargestellten üblichen Form ab, so ist der Kopf 83 der Hubvorrichtung entsprechend gestaltet, um das Anheben des Werkzeuges W in beschriebener Weise zu gewährleisten.

Die gabelförmigen Abschnitte der Teile 83, 70 und 62 bzw. deren Ausnehmungen sind derart gestaltet, daß deren Ränder Anlagen für die entsprechenden Abschnitte des Werkzeugschaftes bilden und daher ein genaues Erfassen und Positionieren der Werkzeuge möglich wird.

Das Positionieren der Werkzeuge in den Ausnehmungen des Regalbodens 12, 13 des Armes 70 und des Kopfes 83 kann in bekannter Weise z. B. mittels Zentrierbolzen Z oder gleichwirkender Zapfen erfolgen, die mit einem Abschnitt des Werkzeuges bzw. seines Schaftes 51 zusammenwirken.

**Patentansprüche**

1. Flexible Fertigungseinrichtung mit mehreren parallel im Abstand nebeneinander angeordneten Bearbeitungsmaschinen (Bm), mehreren regalartigen Magazinen (M) mit übereinander angeordneten horizontalen Regalböden (12, 13) und mit einer an einer Transportschiene (18) angeordneten, in Gassen (G) zwischen den Regalböden (12, 13) schwenkbaren und geradlinig verfahrbaren Greifervorrichtungen (70, 71; 82, 83) aufweisenden Transportvorrichtung (Tro) sowie einer weiteren, an einer Transportschiene (24) angeordneten, schwenkbaren und geradlinig verfahrbaren Greifervorrichtungen (70, 71; 82, 83) aufweisende Transportvorrichtung (Tru) zum Verbringen der Werkzeuge (W) aus den Magazinen (M) zu den Maschinen (Bm) oder in die Magazine der Maschinen (Bm), **dadurch gekennzeichnet,** daß die Magazine (M) auf der Rückseite der Maschinen (Bm) quer zu deren Maschinenlängsachse (N) verlaufend angeordnet sind, aus Magazinabschnitten (5) bestehen, die erste Transportvorrichtung (Tro) an einer ersten über Mannshöhe oberhalb der Magazine (M) geradlinig ununterbrochen laufenden Transportschiene (18) verfahrbar ist, die zweite Tranportvorrichtung (Tru) an einer zweiten, etwa auf halber Höhe unter der ersten an Lücken (L) der unteren Regalböden (13) der einen Regalreihe (B) unterbrochenen Führungsschiene (24) mit rechtwinkligen, bis auf Höhe der Magazine (Ms) der Bearbeitungsmaschinen (Bm) reichenden, über winklig gekrümmte Schienenabschnitte (29) mit der Führungsschiene (24) verbundenen, parallel zur Maschinenlängsachse verlaufenden Verlängerungen (24s) geführt und verfahrbar ist und mindestens eine weitere, eine Mehrzahl von Werkzeugen (W) zwischen den Ebenen der unteren und oberen Regalböden (126 13) in vertikaler Richtung fördernde Transportvorrichtung (30 - 32; 33 - 35) in mindestens einem Magazinabschnitt (5a) angeordnet ist.

2. Fertigungseinrichtung nach Anspruch 1, **dadurch gekennzeichnet,** daß die Werkzeuge (W) vertikal in den Regalböden (12, 13) und in den Tranportvorrichtungen (18 - 22; 24 - 28) hängen.

3. Fertigungseinrichtung nach Anspruch 1, **dadurch gekennzeichnet,** daß die die Werkzeuge (W) von den unteren Regalböden (13) zu den oberen Regalböden (12) und umgekehrt befördernde Vorichtung aus zwei nach Art einer Gewichtsausgleichvorrichtung miteinander verbundenen und durch eine Antriebswelle gemeinsam bewegten Regalböden (30, 32) besteht.

4. Fertigungseinrichtung nach Anspruch 3, **da-**

**durch gekennzeichnet,** daß die Regalböden (30, 31; 33, 34) in ihrer Ausgangsstellung auf Höhe der unteren und auf Höhe der oberen Regale (12, 13) sich befinden.

5. Fertigungseinrichtung nach Anspruch 3, **gekennzeichnet durch** eine Werkzeuge (W) aus einer Beladestellung bis auf Höhe der oberen Regale (12) der Regalriehen (A, B) befördernde Vorrichtung mit zwei Regalböden (33, 34).

6. Fertigungseinrichtung nach Anspruch 1 und einem der Ansprüche 2 bis 4, **dadurch gekennzeichnet,** daß beide Regalreihen (A, B) auf Höhe der unteren Regalböden (13) unter Bildung eines gemeinsamen Durchlasses unterbrochen sind.

7. Fertigungseinrichtung nach Anspruch 1 und einem der Ansprüche 2 bis 6, **dadurch gekennzeichnet,** daß die eine der Werkzeuge von den unteren Regalböden (13) zu den oberen Regalböden (12) und umgekehrt transportierende Vorrichtung nur einen auf- und abwärts bewegbaren Regalboden aufweist und das diesem Boden abgekehrte Ende der die Regalböden bewegenden Ketten entweder ein Gegengewicht trägt oder um eine Antriebswelle geschlungen ist.

8. Fertigungseinrichtung nach Anspruch 1 und einem der Ansprüche 2 bis 7, **dadurch gekennzeichnet,** daß jeder Führungsschiene (18, 24) mehrere Tranportvorrichtungen (Tru, Tro) zugeordnet sind.

9. Fertigungseinrichtung nach Anspruch 1 und einem oder mehreren de Ansprüche 2 bis 8, **dadurch gekennzeichnet,** daß die Transportvorrichtungen (Tru, Tro) mindestens einen Schwenkarm (22, 28) aufweisen, an deren freien Ende die Greifereinrichtung für die Werkzeuge (W) angeordnet ist.

10. Fertigungseinrichtung nach Anspruch 1 und 9, **dadurch gekennzeichnet,** daß die Greifereinrichtung eine das Werkzeug (W) am Kopf seines Schaftes (51) erfassende Hubvorrichtung und einen oberhalb eines Ringwulstes (54) gelegenen Arm (70) aufweist, gegen dessen Unterseite der Ringwulst (54) nach Abheben durch die Hubvorrichtung von dem Rand (63) der Regalausnehmung (14) angedrückt wird.

11. Fertigungseinrichtung nach Anspruch 9 und 10, **dadurch gekennzeichnet,** daß die Hubvorrichtung einen offenen, den konischen Kopf (59, 60) des Werkzeugschaftes (51) untergreifenden Gabelarm aufweist.

12. Fertigungseinrichtung nach Anspruch 1 und einem der Ansprüche 9 bis 11, **dadurch gekennzeichnet,** daß der die Auflage des Ringwulstes (54) bildende Arm (70) gleichfalls gabelartig gestaltet ist und die Ausnehmungen (71, 84) der den konischen Kopf (57, 60) untergreifenden und den Ringwulst (54) übergreifenden Gabelarme der Ausnehmung (14) der Regalböden (12, 13) entgegengesetzt gerichtet sind.

13. Fertigungseinrichtung nach Anspruch 1 und einem der Ansprüche 9 bis 12, **dadurch gekennzeichnet,** daß die Hubvorrichtung eine zwischen zwei geschlossenen Gewindesteigungen (78) einer Welle (72) der Transporteinrichtung höhenverstellbare Kurvenrolle (81) aufweist.

14. Fertigungseinrichtung nach Anspruch 1 und einem der Ansprüche 9 bis 13, **dadurch gekennzeichnet,** daß die Tranporteinrichtung eine Gehäuse (65) und eine darin gelagerte Schwenkvorrichtung (S) aufweist, an der die Gabelarme und die Hubvorrichtung angeordnet sind.

15. Fertigungsvorrichtung nach Anspruch 1 und einem der Ansprüche 9 bis 14, **dadurch gekennzeichnet,** daß die Achse (R) der Schwenkvorrichtung (S) und die die Kurvenrolle (31) der Hubvorrichtung höhenverstellende Welle (72) gleichachsig angeordnet sind und Stirnräder (68, 74) gleichen Durchmessers und gleicher Zähnezahl besitzen.

**Claims**

1. Flexible manufacturing device having several processing machines (Bm) arranged next to one another in parallel with clearance, several shelf-like stores (M) with horizontal shelf floors (12, 13) arranged over one another and having a transport device (Tro) arranged on a transport rail (18) and having gripping devices (70, 71; 82, 83) which can be pivoted and transported in a straight line in channels (G) between the shelf floors (12, 13), as well as a further transport device (Tru) arranged on a transport rail (24) and having gripping devices (70, 71; 82, 83) which can be pivoted and transported in a straight line, for taking the tools (W) from the stores (M) to the machines (Bm) or into the stores of the machines (Bm), characterized in that the stores (M) are arranged on the rear side of the machines (Bm) so that they extend at right angles to their machine longitudinal axis (N), and consist of store sections (5), the first transport device (Tro) can be transported on a first transport rail (18) running above head height above the stores (M) in a straight and uninterrupted manner, the second transport device (Tru) is guided and can be transported at approximately half the height under the first one on a second guide rail (24) which is interrupted at spaces (L) of the lower shelf floors (13) of the one shelf row (B) with rectangular extensions (24s) reaching up to the level of the stores (Ms) of the processing machines (Bm), connected via angularly curved rail sections (29) to the guide rail (24) and extending in parallel with the machine longitudinal axis, and that at least one further transport device (30 - 32; 33 - 35), conveying a plurality of tools (W) between the levels of the lower and upper shelf floors (12, 13) in vertical direction, is arranged in at least one store section (5a).

2. Manufacturing device according to claim 1, characterized in that the tools (W) hang vertically in the shelf floors (12, 13) and in the transport devices (18 - 22; 24 - 28).

3. Manufacturing device according to claim 1, characterized in that the device conveying the tools (W) from the lower shelf floors (13) to the upper shelf floors (12) and vice versa consists of two shelf floors (30, 32) connected to one another in the form of a weight-compensating device and moved together by means of a drive shaft.

4. Manufacturing device according to claim 3, characterized in that the shelf floors (30, 31; 33, 34) in their starting position are located at the level of the lower and at the level of the upper shelves (12, 13).

5. Manufacturing device according to claim 3, characterized by a device with two shelf floors (33, 34), conveying tools (W) from a loading position up to the level of the upper shelves (12) of the shelf rows (A, B).

6. Manufacturing device according to claim 1 and one of claims 2 to 4, characterized in that both shelf rows (A, B) are interrupted at the level of the lower shelf floors (13) with the formation of a common passage.

7. Manufacturing device according to claim 1 and one of claims 2 to 6, characterized in that the device transporting one of the tools from the lower shelf floors (13) to the upper shelf floors (12) and vice versa has only one shelf floor which is moveable upwards and downwards and that the end of the chains moving the shelf floors, the end being directed away from this floor, either carries a counterweight or is wound around a drive shaft.

8. Manufacturing device according to claim 1 and one of claims 2 to 7, characterized in that several transport devices (Tru, Tro) are associated with each guide rail (18, 24).

9. Manufacturing device according to claim 1 and one or several of claims 2 to 8, characterized in that the transport devices (Tru, Tro) have at least one pivot arm (22, 28), on the free ends of which the gripping device for the tools (W) is arranged.

10. Manufacturing device according to claim 1 and 9, characterized in that the gripping device has a lifting device picking up the tool (W) at the head of its shaft (51) and an arm (70) placed above an annular ring (54), the annular ring (54) being pressed against the underside of the arm by the edge (63) of the shelf recess (14) after lifting by the lifting device.

11. Manufacturing device according to claim 9 and 10, characterized in that the lifting device has an open fork arm engaging under the conical head (59, 60) of the tool shaft (51).

12. Manufacturing device according to claim 1 and one of claims 9 to 11, characterized in that the arm (70) forming the support of the annular ring (54) is likewise formed in a fork-like manner and the recesses (71, 84) of the fork arms engaging under the conical head (57, 60) and engaging over the annular ring (54) are directed opposite the recess (14) of the shelf floors (12, 13).

13. Manufacturing device according to claim 1 and one of claims 9 to 12, characterized in that the lifting device has a curve roller (81) which is height-adjustable between two closed thread pitches (78) of a shaft (72) of the transport device.

14. Manufacturing device according to claim 1 and one of claims 9 to 13, characterized in that the transport device has a housing (65) and a pivot device (S) mounted therein, on which the fork arms and the lifting device are arranged.

15. Manufacturing device according to claim 1 and one of claims 9 to 14, characterized in that the axis (R) of the pivot device (S) and the shaft (72) adjusting the height of the curve roller (31) of the lifting device are arranged coaxially and have spur wheels (68, 74) of the same diameter and the same number of teeth.

## Revendications

1. Dispositif de fabrication flexible comportant plusieurs machines d'usinage (Bm), disposées espacées les unes à côté des autres et parallèles entre elles, plusieurs magasins (M) à la manière de rayonnages avec des étagères (12, 13) horizontales, superposées et comportant un dispositif de manutention (Tro) placé sur un rail de transport (18), présentant des dispositifs à griffes (70, 71 ; 82, 83) pivotants et déplaçables en ligne droite, dans des allées (G) situées entre les étagères (12, 13), ainsi qu'un autre dispositif de manutention (Tru), placé sur un rail de transport (24), présentant des dispositifs à griffes (70, 71 ; 82, 83), pivotants et déplaçables en ligne droite pour apporter les outils (W) des magasins (M) aux machines (Bm) ou dans les magasins des machines (Bm), caractérisé en ce que les magasins (M) sont placés sur la face arrière des machines (Bm), transversalement à leur axe longitudinal (N) , en ce qu'ils sont constitués de parties de magasin (5), le premier dispositif de manutention (Tro) est déplaçable sur un premier rail de transport (18) s'étendant de manière ininterrompue en ligne droite, à hauteur d'homme, au-dessus du magasin (M), le deuxième dispositif de manutention (Tru) est guidé et déplaçable sur un deuxième rail de guidage (24) s'étendant à peu près à mi-hauteur au-dessous du premier, interrompu au droit d'espacements entre les étagères (13) inférieures d'une rangée d'étagères (B), avec des prolongements (24s) à angle droit, s'étendant jusqu'à hauteur des magasins (Ms) des machines d'usinage (Bm), assemblés au rail de guidage (24) par des parties de rail (29) coudées, parallèles à l'axe longitudinal des machines et en ce qu'il est prévu au moins un autre dispositif de manutention (30 à 32 ; 33 à 35), transportant plusieurs outils (W) entre les plans des étagères inférieures et tablettes supérieures (12, 13), dans la direction verticale, dans au moins une partie de magasin (5a).

2. Dispositif de fabrication selon la revendication 1, caractérisé en ce que les outils (W) sont suspendus verticalement dans les étagères (12, 13) et dans les dispositifs de manutention (18 à 22 ; 24 à 28).

3. Dispositif de fabrication selon la revendication 1, caractérisé en ce que le dispositif transportant les outils (W) des étagères inférieures (13) aux étagères supérieures (12) et inversement, est constitué de deux étagères (30, 32) assemblées entre elles à la manière d'un dispositif d'équilibrage de poids et déplacées conjointement par un arbre d'entraînement.

4. Dispositif de fabrication selon la revendication 3, caractérisé en ce que les étagères (30, 31 ; 33, 34) se trouvent, dans leur position initiale, à la hauteur des étagères inférieures et à la hauteur des étagères supérieures (12, 13).

5. Dispositif de fabrication selon la revendication 3, caractérisé par un dispositif à deux étagères (33, 34) transportant des outils (W) d'une position de chargement à hauteur des étagères supérieures (12) des rangées d'étagères (A, B).

6. Dispositif de fabrication selon la revendication 1 et l'une des revendications 2 à 4, caractérisé en ce que deux rangées d'étagères (A, B) sont interrompues à hauteur des étagères inférieures (13) pour former un passage commun.

7. Dispositif de fabrication selon la revendication 1 et l'une des revendications 2 à 6, caractérisé en ce que le dispositif transportant les outils des étagères inférieures (13) aux étagères supérieures (12) et inversement ne comporte qu'une étagère montant et descendant et en ce que l'extrémité, opposée à cette étagère, des chaînes déplaçant les étagères, porte un contre-poids ou passe autour d'un arbre d'entraînement.

8. Dispositif de fabrication selon la revendication 1 et l'une des revendications 2 à 7, caractérisé en ce que plusieurs dispositif de manutention (Tru, Tro) sont associés à chaque rail de guidage (18, 24).

9. Dispositif de fabrication selon la revendication 1 et l'une ou plusieurs des revendications 2 à 8, caractérisé en ce que les dispositif de manutention (Tru, Tro) comportent au moins un bras de pivotement (22, 28) à l'extrémité libre duquel est situé le dispositif à griffes pour les outils (W).

10. Dispositif de fabrication selon les revendications 1 et 9, caractérisé en ce que le dispositif à griffes comporte un dispositif de levage saisissant l'outil (W) à la tête de sa tige (51) et un bras (70) placé au-dessus d'un bourrelet annulaire (54), contre la face inférieure duquel le bourrelet annulaire (54) est pressé après soulèvement, par le dispositif de levage, du bord (63) de l'évidement d'étagère (14).

11. Dispositif de fabrication selon les revendications 9 et 10, caractérisé en ce que le dispositif de levage comporte un bras de fourche ouvert, passant sous la tête conique (59, 60) de la tige d'outil (51).

12. Dispositif de fabrication selon la revendication 1 et l'une des revendication 9 à 11, caractérisé en ce que le bras (70) formant l'appui de bourrelet annulaire (54), a également la forme d'une fourche et les évidements (71, 84) des bras de fourche passant sous la tête conique (57, 60) et sur le bourrelet annulaire (54), sont dirigés à l'opposé de l'évidement (14) des étagères (12, 13).

13. Dispositif de fabrication selon la revendication 1 et l'une des revendications 9 à 12, caractérisé en ce que le dispositif de levage comporte un galet de came déplaçable en hauteur entre deux pas de vis (78) fermés d'un arbre (72) du dispositif de manutention.

14. Dispositif de fabrication selon la revendication 1 et l'une des revendications 9 à 13, caractérisé en ce que le dispositif de manutention comporte un boîtier (65) et un dispositif de pivotement (S) placé à l'intérieur, sur lequel sont placés les bras de fourche et le dispositif de levage.

15. Dispositif de fabrication selon la revendication 1 et l'une des revendications 9 à 14, caractérisé en ce que l'axe (R) du dispositif de pivotement (S) et l'arbre (72) déplaçant en hauteur le galet de came (31) du dispositif de levage, sont placés sur le même axe et possèdent des roues à denture droite (68, 74) de même diamètre et de même nombre de dents.

# Fig.1

EP 0 289 834 B1

Fig. 2

Fig.3

EP 0 289 834 B1

Fig. 5

Fig. 6

Fig. 7

Fig. 8

Fig. 4